# EUROPÄISCHE PATENTANMELDUNG

(11) **EP 1 257 123 A1**
(43) Veröffentlichungstag der Anmeldung: **13.11.2002**
(21) Anmeldenummer: 01111067.3
(22) Anmeldetag: 08.05.2001
(51) Int. Cl.: H04N 5/74

(54) **Verfahren zur Bildwiedergabe mit Shutter-Brille**

(71) Anmelder: SIEMENS AKTIENGESELLSCHAFT, 80333 München (DE)
(72) Erfinder: Werner, Marco, 81475 München (DE)

(57) **Zusammenfassung**

Die Erfindung betrifft ein Verfahren zur Bildwiedergabe bei dem abwechselnd ein Originalbild und ein hierzu inverses Bild dargestellt werden, und bei dem ein Shutter insbesondere eine Shuttle-Brille zur Bildbetrachtung verwendet wird, der auf das Originalbild synchronisiert ist.

## Beschreibung

Die Erfindung betrifft ein Verfahren zur Bildwiedergabe.

Mobile Endgeräte der Kommunikationstechnik und der Datenverarbeitungstechnik bieten durch Projektionsdisplays unter Verwendung von Mini-Beamern eine vergleichsweise große Bildfläche. Mit diesen Geräten ist der mobile Zugriff und die Darstellung von sogenannten "high-information-contents" beziehungsweise Internet-Seiten geeignet. Als Projektionsschirm oder Projektionsfläche wird meistens eine Wand- oder eine Tischfläche benutzt. Dabei können diese Seiten beziehungsweise der dargestellte Bildinhalt auch von dritten Personen eingesehen werden. Dies ist insbesondere bei persönlichen Daten problematisch.

Zur Betrachtung von persönlichen Daten in mobilen Geräten werden sogenannte Mikrodisplays verwendet, die der Benutzer direkt vor das Auge hält. Nachteilig ist hierbei die eingeschränkte Bedienbarkeit und auch die komplette Abdeckung eines Auges für die Umgebung.

Der Erfindung liegt die Aufgabe zugrunde, ein Verfahren zur Bildwiedergabe anzugeben, bei dem der vertrauliche Charakter der Bildinhalte insbesondere bei Verwendung von Projektionsdisplays gewahrt ist.

Diese Aufgabe wird erfindungsgemäß durch die im unabhängigen Patentanspruch angegebenen Merkmale gelöst.

Im Folgenden wird die Erfindung anhand eines in der Zeichnung dargestellten Ausführungsbeispieles beschrieben.

Bei dem erfindungsgemäßen Verfahren zur Bildwiedergabe wird beispielsweise die Bildrate verdoppelt, wobei bei jedem geraden Bild der originale Inhalt und bei jedem ungeraden Bild der zugehörige inverse Inhalt dargestellt wird. Hierbei erhält man durch zeitliche Integration bei der Betrachtung ein homogenes weißes oder helles Projektionsbild, auf dem kein Inhalt sichtbar ist. Nur der legitime Betrachter beziehungsweise Benutzer sieht das Bild durch eine sogenannte Shutter-Brille, bei der jeweils das inverse Bild abgedunkelt wird. Die Shutter-Brille ist auf das Originalbild synchronisiert, das der Benutzer während der entsprechenden Zeitintervalle sehen kann.

Die Ausbildung der Shutter-Brille ist für die Erfindung von untergeordneter Bedeutung und kann durch einen Fachmann realisiert werden.

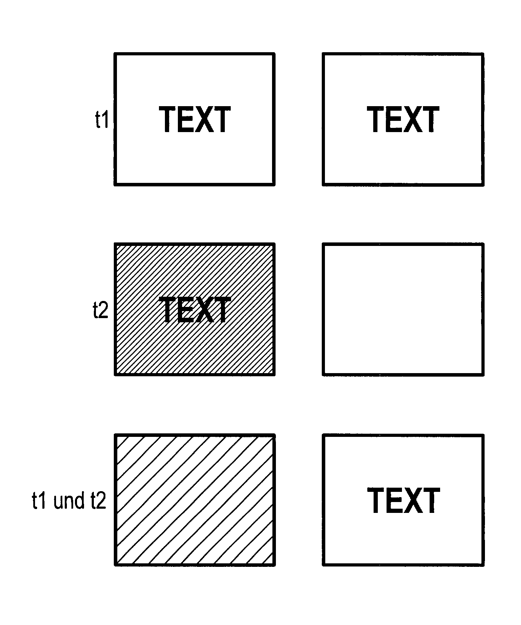

In Figur 1 ist der Verfahrensablauf im Detail dargestellt. Dabei ist in der ersten Spalte jeweils ein Zeitpunkten t1, t2 und eine Integration über die beiden Zeitpunkte tl und t2 angegeben. In einer zweiten Spalte ist jeweils das von einem nicht dargestellten Projektor erzeugte Bild dargestellt, wie es von einem menschlichen Auge wahrgenommen wird. In einer dritten Spalte sind die gleichen Bilder wie in Spalte zwei dargestellt mit der Änderung, daß die Betrachtung über eine nicht dargestellte Shutter-Brille erfolgt.

Ein Projektor stellt zu einem Zeitpunkt t1 (Spalte 1) ein Originalbild (Spalte 2) auf einer Anzeigefläche dar. Der Bildinhalt ist dabei das Wort "Text" mit schwarzen Buchstaben auf weissem Grund. Auch über die Shutter-Brille betrachtet sieht der Benutzer dieses Bild (Spalte 3).

Zu einem Zeitpunkt t2 wird vom Projektor ein inverser Bildinhalt auf der Anzeigetafel dargestellt. Hierbei wird das Wort "Text" mit weißen Buchstaben auf schwarzem Grund dargestellt. Über die Shutter-Brille wird dieses Bild ausgeblendet, so dass der Betrachter zu diesem Zeitpunkt bzw. in diesem Zeitintervall kein Bild sieht.

In der dritten Zeile ist das Bild dargestellt, wie es bei einem vergleichsweise schnellen Bildwechsel aufgrund der Integration über die Zeitpunkte t1 und t2 von einem Auge wahrgenommen wird. Bei der direkten Betrachtung des Projektionsdisplays beziehungsweise der Anzeigefläche kann von einem Betrachter aufgrund der abwechselnden originalen und inversen Bildinhalte nur eine graue Fläche wahrgenommen werden. Nur der legitime Betrachter, der das Bild beziehungsweise die Anzeigefläche über eine Shutter-Brille betrachtet, sieht weiter den originalen Bildinhalt.

Die Shutter-Brille kann leicht in normale Brillen integriert und beispielsweise über eine schnurlose Schnittstelle angesteuert werden. Ebenso ist es möglich, die Zahl der legitimen Betrachter durch die Verwendung von mehreren Shutter-Brillen festzulegen.

## Patentansprüche

1. Verfahren zur Bildwiedergabe
bei dem abwechselnd ein Originalbild und ein hierzu inverses Bild dargestellt werden, und bei dem ein Shutter insbesondere eine Shutter-Brille zur Bildbetrachtung verwendet wird, der auf das Originalbild synchronisiert ist.
